# EUROPÄISCHE PATENTSCHRIFT

(11) **EP 1 537 905 B1**
(45) Veröffentlichungstag und Bekanntmachung des Hinweises auf die Patenterteilung: **11.04.2007**
(21) Anmeldenummer: 03026416.2
(22) Anmeldetag: 19.11.2003
(51) Int. Cl.: B01D 53/34, B01D 53/50, B01D 53/68, B01D 53/64, B01D 53/83

(54) **Verfahren und Vorrichtung zur Sorption von Schadstoffen aus Verbrennungsabgasen mittels einer fluidisierenden Wirbelschicht**
Process and apparatus for sorption of contaminants from flue gases by means of a fluidised bed
Procédé et installation pour la sorption de polluants de fumées de combustion au moyen d'un lit fluidisé

(43) Veröffentlichungstag der Anmeldung: 08.06.2005
(73) Patentinhaber: Austrian Energy & Environment AG, 8020 Graz (AT)
(72) Erfinder: Reissner, Harald Karl, 8071 Hausmannstätten (AT); Brunner, Christian, 8010 Graz (AT)
(74) Vertreter: VA TECH Patente GmbH & Co

(56) Entgegenhaltungen:
- EP-A- 0 554 487
- AT-A- 388 312
- AT-B- 403 664
- DE-A- 3 313 522
- DE-A- 4 415 719
- DE-A- 10 133 991
- DE-C- 4 206 602

## Beschreibung

Die Erfindung betrifft ein Verfahren gemäß dem Oberbegriff von Anspruch 1 sowie eine entsprechende Vorrichtung.
Gemäß der AT 403 664 B ist eine Anlage zur Abgasreinigung bekannt, bei der sowohl hochbeladenes, abreagiertes Additiv als auch unreagiertes Additiv rezirkuliert wird. Aufgrund der im Kreis geführten großen Feststoffmengen im Vergleich zum zudosierten frischen Additiv bzw. den abgezogenen Feststoffmengen ergibt sich eine sehr langsame Regelungscharakteristik bezüglich der Reaktion auf kurzzeitige Schadgasspitzen im Rohgas, welche insbesondere durch heterogenen Brennstoff entstehen.
Die DE 42 06 602 C1 und die DE 101 33 991 A1 zeigen eine Zugabe von frischem Additiv vor dem Reaktor. Die EP 554 487 A1 lehrt die Zugabe von frischem Additiv vor und in den Reaktor zur Steuerung der Veränderung in der Zusammensetzung der Verunreinigungen.
Die DE 44 15 719 A zeigt das Zuführen des gesamten frischen Additivs (14,15) zwischen Reaktor (3) und (Fein)Abscheidung. Die DE 33 13 552 A zeigt ebenfalls eine Frischkalkstrecke (Seite 6-8, Fig.), in welcher das gesamte frische Additiv zugegeben wird. Beide Veröffentlichungen zeigen keine Zuführung von frischem Additiv vor der Wirbelschicht. Die AT 388 312 B zeigt in der Fig. unter 5, 5' die Zugabe von Additiv direkt vor dem Flächenfilter, um dadurch einen Filterkuchen mit aktivem Sorbens zu erzeugen, allerdings ist hier keine Wirbelschicht vorhanden.
Eine Aufgabe der Erfindung ist es daher, ein Abgasreinigungsverfahren zu entwickeln, bei dem Schadgasspitzen besser ausgeregelt werden können.
Die Aufgabe wird durch ein Verfahren gemäß Anspruch 1 bzw. durch eine Anlage gemäß Anspruch 7 gelöst.
Durch die weitere Zugabe eines frischen unreagierten Additives oder einer Additivmischung vor der Wirbelschicht können Schadgasspitzen abgefangen werden. Somit kann durch die Regelung der Absorptionsleistung über die Zufuhr von Frischadditiven an zwei unterschiedlichen Stellen der Additivverbrauch durch bessere Ausnützung des Additivs verringert werden und damit auch die Menge der zu entsorgenden Reaktionsprodukte, wodurch sowohl der Wirtschaftlichkeit als auch der Verringerung des Deponievolumens Rechnung getragen wird.

Ausgestaltungen des Verfahrens sind in den abhängigen Ansprüchen 2 bis 6 angeführt.
Dabei ist vorgesehen, dass die zugegebene Menge des zweiten Additives in Abhängigkeit vom Schadstoffgehalt im Rohgas geregelt wird. Damit kann eine gezielte Zugabe von Additiv bei Schadgasspitzen erfolgen.
Die Ausführungsvariante, dass die zugegebene Menge des ersten Additives in Abhängigkeit von der Reingaskonzentration geregelt wird, hat den Vorteil, dass somit die Einhaltung der Reingasemissionen nach dem Rauchgasreinigungsverfahren sichergestellt wird.

Es ist von Vorteil, wenn die Reaktivität des zweiten Additives bezüglich Abscheideeigenschaften für saure Schadstoffe höher ist als die Reaktivität des ersten Additives. Dadurch können bereits vor der Wirbelschicht saure Schadstoffe wie HCl, HF, SO₂ und SO₃ abgeschieden werden, wodurch die Konzentrationen der in den Reaktor eintretenden Schadstoffe konstant auf einem gleichmäßigen Niveau gehalten werden können.
Die besten Abscheideergebnisse stellen sich ein, wenn als erstes und/oder zweites Additiv eine Mischung aus einem staubfömigen Stoff mit hohem Gehalt an Alkalioxiden, -hydroxiden und/oder -karbonaten und/oder Erdalkalioxiden, -hydroxiden oder -karbonaten verwendet wird.
Weiters kann vorgesehen sein, dass zur Verringerung des Schadstoffgehaltes im Reingas dem ersten und/oder dem zweiten Additiv ein oberflächenaktiver und/oder katalytischer Stoff beigemischt wird.
Da das rezirkulierte Additiv nicht zur Ausregelung von Schadgasspitzen herangezogen werden muss, kann die Regelung der Rezirkulation in Abhängigkeit des Abgasvolumensstromes, der in das Abgas eingedüsten Wassermenge und der Abgastemperatur erfolgen.
Die Abgase von thermischen Prozessen enthalten je nach Brennstoffzusammensetzung unterschiedliche Schadstoffkonzentrationen. Besonders nach der Verbrennung von Müll, Reststoffen und Biomasse ist es wichtig, eine ökonomisch und ökologisch sinnvolle Reinigung der Abgase durchzuführen. Eine mehrstufige Behandlung der Abgase mit Hauptentstaubung, mehrstufiger Naßwäsche, Feinreinigung und Entstickung ist bei diesen Schadstoffkonzentrationen zu aufwendig und vor allem für kleinere Anlagen (wenige Tonnen Brennstoff pro Stunde) zu teuer. Als vernünftige Lösung erscheint ein Trockenverfahren, das durch Rezirkulation des Additivs geringere Reststoffmengen produziert. Prinzipiell wird durch Zugabe von staubförmigen, trockenen Additiven eine Chemisorption ermöglicht, die saure, gasförmige Stoffe zu Salzen umwandelt. Die Reaktionsprodukte werden danach gemeinsam mit unreagiertem Additiv und Flugasche in einer Entstaubungseinrichtung abgeschieden.
Die Erfindung wird anhand einer beispielhaften Anlage zur Durchführung des Verfahrens erklärt. Die Anlage ist in der angeschlossenen Figur schematisch dargestellt.

In einem Sorptionsreaktor 1 wird das Abgas eines thermischen Prozesses, wie etwa Rauchgas, mit Additiv in Kontakt gebracht. Die Zuführung von Frischadditiv 10, 11 erfolgt aus den Sorbenssilos 2, 3 mittels Fördereinrichtungen, mit welchen die Frischadditive, also unreagierte Additive, dosiert werden. Aus dem Sorbenssilo 3 wird also Frischadditiv 11 so in den zum Sorptionsreaktor führenden Abgaskanal 8 eingebracht, dass dieses Additiv im Abgaskanal eine Verweilzeit von > 0,5 Sekunden erreicht.
Das zu rezirkulierende Additiv 13 wird aus dem Zwischenbehälter 5 in den Sorptionsreaktor 1 gefördert. Die Zugabe erfolgt im unteren Bereich des Sorptionsreaktors 1, der mit einem Düsenboden ausgestattet sein kann. Auszuscheidendes Additiv 14 wird in den Produktsilo 7 gefördert, von wo es aus der Anlage entfernt werden kann.
Das Frischadditiv 10, 11 soll trocken und pulverförmig sein und eine hohe spezifische Oberfläche besitzen. Als Additiv werden Stoffe mit hohem Gehalt an Alkali- bzw. Erdalkalihydroxiden, -oxiden, oder -karbonaten, wie Kalziumhydroxid und Kalkmehl (Kalziumkarbonat), verwendet.
Das Frischadditiv 11 zeichnet sich vorteilhafterweise durch eine höhere Reaktivität hinsichtlich der sauren Schadgasbestandteile gegenüber dem Frischadditiv 10 aus.
Um auch die Abscheidung von gasförmigem Quecksilber und gasförmigen organischen Verbindungen, wie Dioxinen, Furanen, usw. sicherzustellen, kann dem Additiv ein oberflächenaktiver Stoff beigemischt werden. Beispielhaft seien staubförmiger Kohlenstoff, wie Aktivkohle oder Herdofenkoks erwähnt, aber auch adsorptiv wirkende Zeolithe, die in ihrem Kristallgitter Moleküle bestimmter Größe einlagern können, kommen in Frage.
Die Temperatur im Sorptionsreaktor 1 und den nachgeschalteten, abgasführenden Anlagenteilen ist einerseits möglichst tief zu wählen, um das Gleichgewicht der chemischen Reaktionen auf Seite der Salzbildung zu verschieben, andererseits muß sie über dem Wasser- und Säuretaupunkt des Abgases liegen, um Ablagerungen an kalten Stellen des Systems und damit verbundenen Korrosionsschäden durch die sauren Bestandteile zu vermeiden. Je nach Anlagenkonfiguration und vorgeschalteten Wärmetauschern beziehungsweise Kühleinrichtungen kann es erforderlich sein, die Temperatur im Sorptionsreaktor 1 durch Eindüsen einer Flüssigkeit 12, vorzugsweise Wasser, zu regeln. Die Flüssigkeitseindüsung ist im unteren Bereich des Sorptionsreaktors 1 angeordnet und wird von einem Vorlagebehälter 6 gespeist.
Die Schadstoffe reagieren im Sorptionsreaktor 1, der als fluidisierende Wirbelschichtanlage ausgeführt ist, mit dem aufschwebenden Additiv. Das Abgas wird über eine Leitung 8 in den Sorptionsreaktor 1 eingebracht, wobei die Abgasgeschwindigkeit so gewählt wird, daß sich die Additivpartikel längere Zeit im Sorptionsreaktor 1 bewegen und somit die Reaktionswahrscheinlichkeit zwischen Schadstoff und Additiv entscheidend erhöht wird. Letztendlich werden die Additivpartikel und der im Abgas enthaltene Staub über das obere Ende des Sorptionsreaktors 1 ausgetragen und gelangen über eine Abgasleitung 15 in den Partikelabscheider 4.
Dieser Abscheider 4 hat die Aufgabe, den Abgasstrom von den Partikeln soweit zu befreien, dass die Restgehalte im Reingas 9 unter den gesetzlich verankerten Grenzwerten für Staubemissionen liegen. Da es sich dabei zumeist um Staubkonzentrationen von < 10 mg/Nm³ handelt, wird ein Textilfilter, wie ein Schlauch- oder Taschenfilter, anderen Systemen, wie z. B. Elektrofiltern, ökonomisch überlegen sein. Die Partikel lagern sich hier an dem Filtermedium an und bauen die Filterhilfsschicht auf. Die Durchströmung der Filterhilfsschicht mit Abgas hat zur Folge, dass nach dem bewährten Prinzip des Flugstromverfahrens auch gasförmige Schadstoffe, die bis zum Eintritt in den Abscheider 4 noch nicht mit dem Additiv reagierten, jetzt eine Reaktion eingehen werden. Die abgeschiedene Fraktion wird über kontinuierlich laufende Austragsorgane aus dem Abscheider 4 über eine Leitung dem Zwischenbehälter 5 zugeführt. Vom Zwischenbehälter 5 wird ein Teil der Fraktion in den Sorptionsreaktor 1 rezirkuliert, der verbleibende Teil 14 in einen Produktsilo 7 abgefüllt und entsorgt.
Der Anteil des aus dem Zwischenbehälter 5 zur Rezirkulation gelangenden Feststoffes wird in Abhängigkeit von verfahrenstechnischen Parametern, wie dem Rauchgasvolumenstrom, der Rauchgastemperatur und der eingedüsten Wassermenge geregelt.
Im Falle eines erhöhten Schadstoffgehalts im Abgas muss die Sorptionsleistung erhöht werden. Dies geschieht durch Zugabe von Frischadditiv 10, 11 an den vorgegebenen Positionen.

### Bezugszeichenliste:

- 1.: Sorptionsreaktor
- 2.: Sorbenssilo
- 3.: Sorbenssilo
- 4.: Partikelabscheider
- 5.: Zwischenbehälter
- 6.: Vorlagebehälter
- 7.: Produktsilo
- 8.: Abgaskanal
- 9.: Reingas
- 10.: Frischadditiv
- 11.: Frischadditiv
- 12.: Flüssigkeit
- 13.: zu rezirkulierendes Additiv
- 14.: auszuscheidendes Additiv
- 15.: Abgasleitung

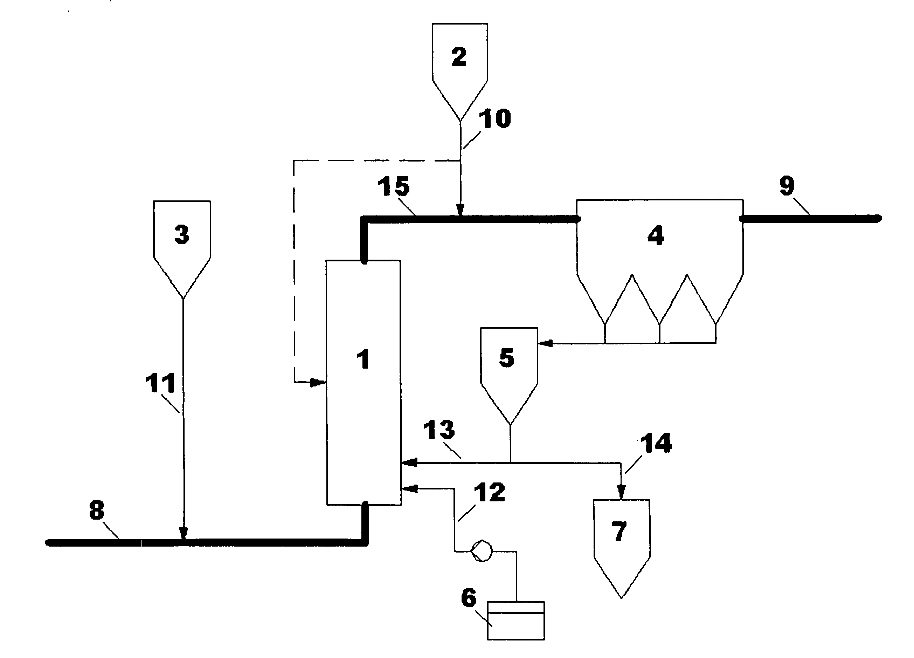

## Patentansprüche

1. Verfahren zur Sorption von Schadstoffen mittels Additiv und Abscheidung des beladenen Additivs gemeinsam mit dem Staub aus Abgasen thermischer Prozesse, vorzugsweise aus Abgasen nach einer Verbrennung von Müll, Reststoffen, Biomasse und/oder heterogenen Brennstoffen, wobei Additiv zur intensiven Durchmischung mit den Abgasen in einer fluidisierenden Wirbelschicht geführt wird, unter anschließender Abscheidung des im Abgasstrom mitgerissenen Additivs, des Staubs und des Reaktionsprodukts und Rezirkulation des abgeschiedenen Additivs, wobei eine erste Zugabe von frischem Additiv nach der Wirbelschicht vor der Abscheidung erfolgt, **dadurch gekennzeichnet dass** eine zweite Zugabe von frischem Additiv vor der Wirbelschicht in den zur Wirbelschicht führenden Abgaskanal erfolgt und dass die Reaktivität des zweiten Additives bezüglich Abscheideeigenschaften für saure Schadstoffe höher ist als die Reaktivität des ersten Additives.

2. Verfahren nach Anspruch 1, **dadurch gekennzeichnet, dass** die zugegebene Menge des zweiten Additives in Abhängigkeit vom Schadstoffgehalt im Rohgas geregelt wird.

3. Verfahren nach Anspruch 1 oder 2, **dadurch gekennzeichnet, dass** die zugegebene Menge des ersten Additives in Abhängigkeit von der Reingaskonzentration geregelt wird.

4. Verfahren nach einem der Ansprüche 1 bis 3, **dadurch gekennzeichnet, dass** als erstes und/oder zweites Additiv eine Mischung aus einem staubfömigen Stoff mit hohem Gehalt an Alkalioxiden, -hydroxiden und/oder -karbonaten und/oder Erdalkalioxiden, -hydroxiden oder-karbonaten verwendet wird.

5. Verfahren nach einem der Ansprüche 1 bis 4, **dadurch gekennzeichnet, dass** zur Verringerung des Schadstoffgehaltes im Reingas dem ersten und/oder dem zweiten Additiv ein oberflächenaktiver und/oder katalytischer Stoff beigemischt wird.

6. Verfahren nach einem der Ansprüche 1 bis 5, **dadurch gekennzeichnet, dass** die Regelung der Rezirkulation in Abhängigkeit des Abgasvolumensstromes, der in das Abgas eingedüsten Wassermenge und der Abgastemperatur erfolgt.

7. Vorrichtung zur Durchführung des Verfahrens nach einem der Ansprüche 1 bis 6 mit einem Wirbelschichtreaktor,
mit einer Einrichtung (4) zur Abscheidung des aus dem Wirbelschichtreaktor (1) im Abgasstrom mitgerissenen Additivs, des Staubs und des Reaktionsprodukts,
mit einer Einrichtung (5, 13) zur Rezirkulation des abgeschiedenen Additivs, wobei eine erste Zugabeeinrichtung (2) gefüllt mit frischem Additiv nach dem Wirbelschichtreaktor (1) vor der Einrichtung (4) zur Abscheidung vorgesehen ist, **dadurch gekennzeichnet, daß** eine zweite Zugabeeinrichtung (3) gefüllt mit frischem Additiv (11) zur Zugabe von frischem Additiv (11) vor dem Wirbelschichtreaktor (1) in den zum Wirbelschichtreaktor führenden Abgaskanal (8) vorgesehen ist, wobei die Reaktivität des Additives in der zweiten Zugabeeinrichtung (3) bezüglich Abscheideeigenschaften für saure Schadstoffe höher ist als die Reaktivität des Additives in der ersten Zugabeeinrichtung (2).

## Claims

1. Process for the sorption of pollutants by means of additive and precipitation of the laden additive together with the dust from offgases from thermal processes, preferably from offgases after combustion of domestic waste, residues, biomass and/or heterogeneous fuels, in which additive is conveyed in a fluidized bed for intensive mixing with the offgases, with subsequent precipitation of the additive entrained in the offgas stream, the dust and the reaction product and recirculation of the precipitated additive, and a first addition of fresh additive is carried out downstream of the fluidized bed before precipitation, **characterized in that** a second addition of fresh additive is carried out upstream of the fluidized bed into the offgas pipe leading to the fluidized bed and **in that** the reactivity of the second additive in respect of removal properties for acidic pollutants is higher than the reactivity of the first additive.

2. Process according to Claim 1, **characterized in that** the added amount of the second additive is regulated as a function of the pollutant content in the unpurified gas.

3. Process according to Claim 1 or 2, **characterized in that** the added amount of the first additive is regulated as a function of the purified gas concentration.

4. Process according to any of Claims 1 to 3, **characterized in that** a mixture of a dust-like material having a high content of alkali metal oxides, hydroxides and/or carbonates and/or alkaline earth metal oxides, hydroxides or carbonates is used as first and/or second additive.

5. Process according to any of Claims 1 to 4, **characterized in that** a surface-active and/or catalytic substance is mixed into the first and/or second additive in order to reduce the pollutant content in the purified gas.

6. Process according to any of Claims 1 to 5, **characterized in that** the recirculation is regulated as a function of the offgas volume flow, the amount of water sprayed into the offgas and the offgas temperature.

7. Apparatus for carrying out the process according to any of Claims 1 to 6 comprising a fluidized-bed reactor, a facility (4) for precipitation of the additive entrained in the offgas stream from the fluidized-bed reactor (1), the dust and the reaction product, a facility (5, 13) for recirculation of the precipitated additive, with a first addition facility (2) filled with fresh additive being provided downstream of the fluidized-bed reactor (1) before the facility (4) for precipitation, **characterized in that** a second addition facility (13) filled with fresh additive (11) is provided for addition of fresh additive (11) upstream of the fluidized-bed reactor (1) into the offgas pipe (8) leading to the fluidized-bed reactor, with the reactivity of the additive in the second addition facility (3) in respect of remover properties for acidic pollutants being higher than the reactivity of the additive in the first addition facility (2).

## Revendications

1. Procédé de sorption de polluants au moyen d'un additif et d'une séparation de l'additif chargé, conjointement avec la poussière issue des gaz d'échappement de processus thermiques, de préférence issue de gaz d'échappement après une combustion d'ordures, de résidus, de biomasse et/ou de combustible hétérogène, sachant qu'un additif, devant être mis en mélange intime avec les gaz d'échappement, est passé dans un lit fluidisé, fluidisant, avec séparation subséquente de l'additif entraîné dans le flux de gaz d'échappement, de la poussière et du produit de réaction et recirculation de l'additif séparé, où une première addition d'additif neuf est effectuée en aval du lit fluidisé et en amont de la séparation, **caractérisé en ce qu'**une deuxième addition d'additif neuf est effectuée, en amont du lit fluidisé, dans le canal de gaz d'échappement menant au lit fluidisé, et **en ce que** la réactivité du deuxième additif, du point de vue des propriétés de séparation pour des polluants acides, est plus élevée que la réactivité du premier additif.

2. Procédé selon la revendication 1, **caractérisé en ce que** la quantité ajoutée de deuxième additif est réglée en fonction de la teneur en polluants dans les gaz bruts.

3. Procédé selon la revendication 1 ou 2, **caractérisé en ce que** la quantité ajoutée de premier additif est réglée en fonction de la concentration en gaz épurés.

4. Procédé selon l'une des revendications 1 à 3, **caractérisé en ce qu'**on utilise comme premier et/ou comme deuxième additif, un mélange, formé d'une substance pulvérulente à haute teneur en oxydes, hydroxydes et/ou carbonates alcalins et/ou oxydes, hydroxydes ou carbonates alcalino-terreux.

5. Procédé selon l'une des revendications 1 à 4, **caractérisé en ce qu'**on ajoute en mélange, au premier et/ou au deuxième additif, une substance à effet tensioactif ou catalytique, dans le but de diminuer la teneur en polluants dans les gaz épurés.

6. Procédé selon l'une des revendications 1 à 5, **caractérisé en ce que** la régulation de la recirculation s'effectue en fonction du débit volume de gaz d'échappement, de la quantité d'eau injectée dans les gaz d'échappement et/ou de la température des gaz d'échappement,

7. Dispositif de mise en oeuvre du procédé selon l'une des revendications 1 à 6, avec un réacteur à lit fluidisé, avec un dispositif (4) pour séparer l'additif entraîné dans le flux de gaz d'échappement issu du réacteur à lit fluidisé (1), la poussière et le produit de réaction, avec un dispositif (5, 13) pour mettre en circulation l'additif séparé, où un premier dispositif d'addition (2), rempli d'additif neuf, est prévu en aval du réacteur à lit fluidisé (1), en amont du dispositif pour la séparation, **caractérisé en ce qu'**un deuxième dispositif d'addition (3) rempli d'additif (11) neuf, pour addition d'additif (11) neuf, est prévu en amont du réacteur à lit fluidisé (1),
